**Europäisches Patentamt**

**European Patent Office**

**Office européen des brevets**

(19)

(11) Veröffentlichungsnummer: **0 234 482 B1**

(12) # EUROPÄISCHE PATENTSCHRIFT

(45) Veröffentlichungstag der Patentschrift:
09.10.91 Patentblatt 91/41

(51) Int. Cl.$^5$: **H04N 5/782, G01P 3/46**

(21) Anmeldenummer: **87102225.7**

(22) Anmeldetag: **17.02.87**

(54) **Gerät, insbesondere Videorecorder.**

(30) Priorität: **26.02.86 DE 3606091**

(43) Veröffentlichungstag der Anmeldung:
**02.09.87 Patentblatt 87/36**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**WO-A-80/01525**
**DE-A- 3 115 670**
**US-A- 3 801 833**
**US-A- 4 025 934**

(73) Patentinhaber: **Deutsche Thomson-Brandt GmbH**
**Hermann-Schwer-Strasse 3 Postfach 1307**
**W-7730 Villingen-Schwenningen (DE)**

(72) Erfinder: **Oberjatzas, Günter, Dipl.-Ing.**
**Langekampstrasse 42**
**W-3013 Barsinghausen (DE)**
Erfinder: **Keesen, Heinz-Werner, Dr. Ing.**
**Tiestestrasse 5**
**W-3000 Hannover 1 (DE)**

(74) Vertreter: **Einsel, Robert, Dipl.-Ing.**
**Deutsche Thomson-Brandt GmbH Patent- und Lizenzabteilung Göttinger Chaussee 76**
**W-3000 Hannover 91 (DE)**

## Beschreibung

Die Erfindung betrifft ein Gerät, insbesondere einen Videorecorder, gemäß dem Oberbegriff des Patentspruchs 1.

Aus der DE-A-31 15 670 ist ein Verfahren bekannt, die Winkellage der Magnetköpfe zum Band zu bestimmen. Eine Kopfradscheibe enthält neben den beiden rotierenden Magnetköpfen zwei rotierende Permanentmagnete, die während der Rotation in einem stationären Kopf oder in einer stationären Spule außerhalb des Kopfes, fest eingebaut in einer Kopfradumgebung, Impulse wechselnder Polarität erzeugen. Die Impulse dienen als Kriterium für die jeweilige Stellung und Geschwindigkeit der Kopfradscheibe (Seite 6, erster Absatz).

Der Erfindung liegt die Aufgabe zugrunde, eine Anordnung zu schaffen, die die Anzeige der Winkelposition der Kopfradscheibe verbessert. Die Aufgabe wird durch die im Patentansprüche 1 angegebenen Merkmale gelöst. Verteilhafte Weiter-bildungen der Erfindung sind in abhängigen Ansprüchen angegeben.

Es ist auch eine Kopfradanordnung bekannt (US-A-4 025 934), bei der dem Kopfrad ein Geber für hohe Frequenzen mit zwei nebeneinander liegenden Leitern zugeordnet ist. Als Indikator dient dabei eine rotierende archimedische Spirale aus Metall, die zwischen dem Geber und dem Fühler in der Funktion einer Empfangspule angeordnet ist. Die zusätzliche Ausnutzung der für die eigentliche Signalabtastung vorgesehenen Magnetköpfe als Fühler in dem Sinne, daß den Magnetköpfen neben dem Nutzsignal im Verlauf einer Umdrehung auch das Signal des Gebers zugeführt ist, ist dort jedoch nicht vorgesehen.

Zum besseren Verständnis der Erfindung werden nachstehend Ausführungsbeispiele anhand von Zeichnungen näher erläutert. Es zeigen:

Fig. 1 einen Geber an einer Kopfradscheibe,
Fig. 2 einen Geber auf einer Kopfradscheibe,
Fig. 3 eine Schemazeichnung für zwei Geber an einer Kopfradscheibe,
Fig. 4 das Magnetfeld eines Gebers,
Fig. 5 eine von einem Geber in einem Magnetkopf induzierte Spannung,
Fig. 6 einen Geber in einer Kopfradumgebung,
Fig. 7 eine V-förmige Anordnung mit zwei Leiterschleifen,
Fig. 8 eine V-förmige Anordnung mit einer Leiterschleife,
Fig. 9 eine weitere Anordnung von Leitern und
Fig. 10 Größenverhältnisse.

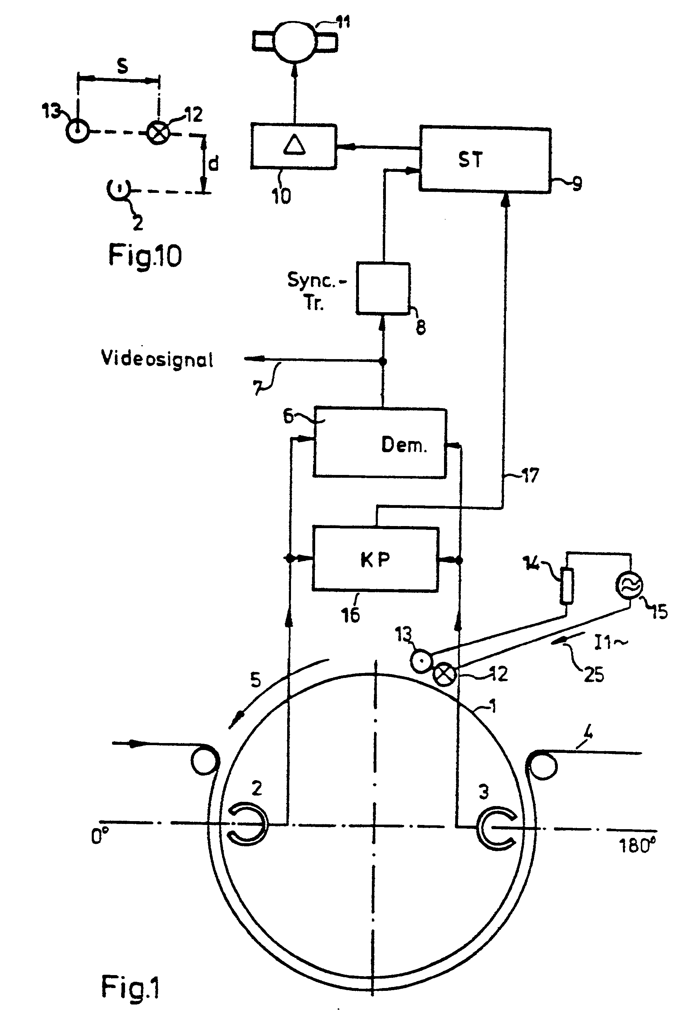

Fig. 1 zeigt eine Kopfradscheibe oder eine Kopftrommel 1, im folgenden Kopfrad genannt, mit zwei Magnetköpfen 2 und 3. Um das Kopfrad 1 ist ein Magnetband 4 gelegt. Das Kopfrad 1 rotiert in Richtung 5. Felder im Magnetband 4 induzieren in den Magnetköpfen 2 und 3 Spannungen, die über Leitungen zu einem Demodulator 6 gegeben werden. Der Demodulator 6 demoduliert die vom Magnetband 4 kommenden Signale und führt demodulierte Signale dem Ausgang 7 zu. Am Ausgang 7 kann ein Videosignal abgegriffenwerden. In einer Synchrontrennungsstufe 8 werden Synchronisationsworter, im folgenden Synchronwörter genannt, herausgefiltert. Diese Synchronwörter werden zu einer Steuerung 9 weitergeleitet. Die Steuerung 9 steuert über einen Verstärker 10 eine kopfradregelung 11. Parallel zur Rotationsachse des Kopfrades 1 sind zwei Leiter 12 und 13 angeordnet. Die Leiter 12 und 13 sind fest im Chassis des Videorecorders, im folgenden Kopfradumgebung genannt, eingebaut. Eine Wechselspannungsquelle 15 versorgt die Leiter 12 und 13 über einen Begrenzungswiderstand 14 mit einem Wechselstrom I1. Die Leiter 12 und 13 sind länglich ausgebildet. Die Pfeilrichtung 25 gibt die Stromrichtung an. Der Strom I1 durchfließt den Leiter 12 in Richtung in die Zeichnungsebene hinein und den Leiter 13 in Richtung aus der Zeichnungsebene heraus. Der Strom I1 durchfließt die beiden Leiter 12,13 in entgegengesetzter Richtung, also im Gegensinn, so daß sich um die Leiter 12,13 ein elektrisches Feld mit einer minimalen Feldstärke zwischen den beiden Leitern ausbildet. Eine Kopfpositions-schaltung 16 trennt Impulse aus den von den Magnetköpfen 2 und 3 kommenden Signalen heraus. Diese Impulse werden von den Leitern 12 und 13 induziert. Die Impulse werden von der Kopfpositionsschaltung 16 über die Leitung 17 zur Steuerung 9 weitergegeben. Die Steuerung 9 vergleicht die von der Synchrontrennung 8 kommenden Synchronwörter mit den Kopfpositionsimpulsen und regelt aufgrund der Synchronwörter und der Impulse die Kopfradregelung 11.

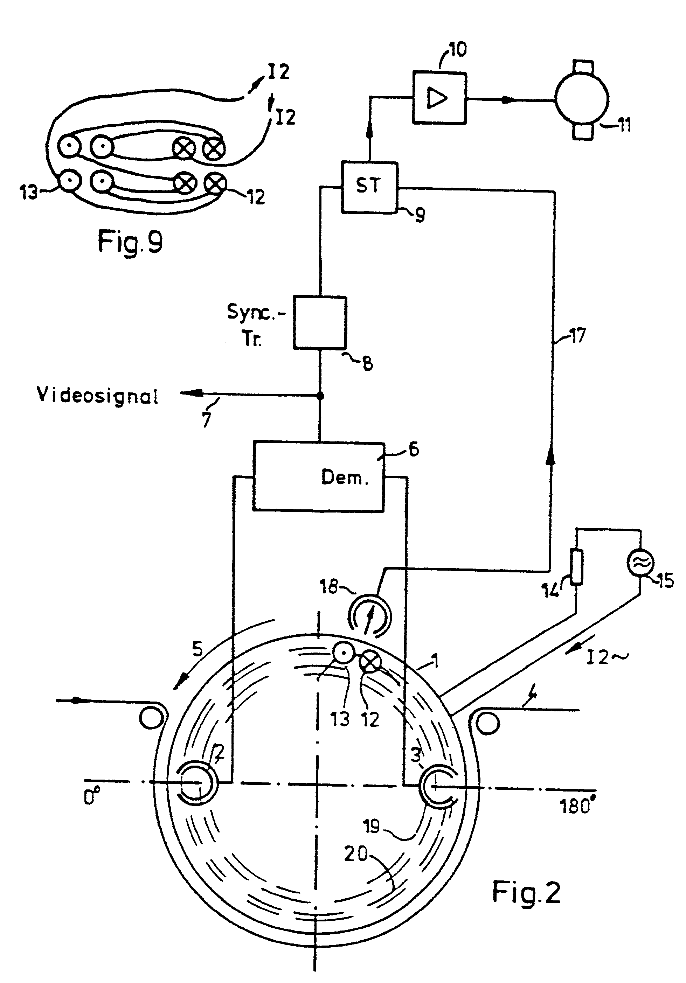

Fig. 2 zeigt die beiden länglichen Leiter 12 und 13 parallel zur Rotationsachse des Kopfrades 1 fest eingebaut in dem Kopfrad 1. Die Leiter 12 und 13 werden von der Wechselspannungsquelle 15 und über einen Begrenzungswiderstand 14 mit einem Strom I2 versorgt. Die beiden Leiter 12 und 13 sind über Schleifringe 19 und 20 und über Kontaktschleifer mit der Spannungsguelle und den Begrenzungswiderstand 14 verbunden. Vorteilhaft sind die Magnetköpfe 2 und 3 und die Leiter 12 und 13 auf dem Kopfrad in zwei verschiedenen Ebenen angeordnet, so daß die Leiter 12 und 13 das Magnetband 4 nicht beeinflussen. Während der Rotation des Kopfrades 1 induzieren die Leiter 12 und 13 eine Spannung in dem Magnetkopf 18. Die Spannung wird über die Leitung 17 zur Steuerung 9 weitergegeben.

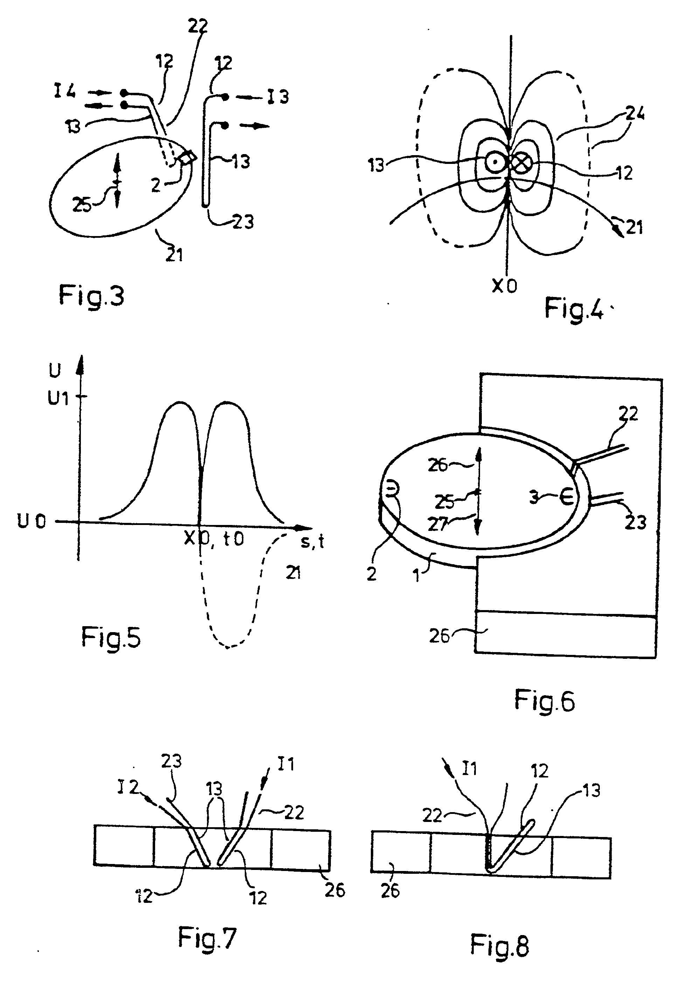

Fig. 3 zeigt einen Magnetkopf 2 auf einer Kopfradbahn 21. Der Magnetkopf 2 rotiert auf der Kopfradbahn 21 und ist in Richtung der Rotationsachse 25 verschiebbar. An der Kopfradbahn 21 sind zwei Leiterschleifen 22 und 23 angeordnet. Jede der beiden Leiterschleifen 22,23 besteht aus zwei stromdurchflossenen Leitern 12 und 13. Die Leiterschleife 23 ist parallel der Rotationsachse 25 angeordnet. Die Leiterschleife 22 erstreckt sich über einen Hubbereich der Kopfradbahn 21. Die Leiterschleife 22 bildet mit der Leiterschleife 23 einen spitzen Winkel bzw. eine V-förmige Anordnung. Die Leiterschleife 22 ist so angeordnet, daß sie über den gesamten Hubbereich der Ropfradbahn 21 eine Spannung in dem Magnetkopf 2 induzieren kann. Über die Leiterschleife 23 ist eine genaue Bestimmung der Kopfposition 2 möglich. Über die Häufigkeit der induzierten Impulse kann eine Geschwindigkeit des Magnetkopfes 2 bestimmt werden. Durch die Schräglage der Leiterschleife 22 zur Leiterschleife 23 sind verschiedene Abstände zwischen den Leiterschleifen 22 und 23 vorgegeben. Aus den verschiedenen Abständen zwischen den Leiterbahnen 22,23 ist eine Höhenverschiebung der Kopfradbahn in Richtung der Rotationsachse 25 über einen Hubbereich berechenbar. Der Hubbereich dient dazu, um mehrere parallele Längsspuren, die blockweise auf einem Magnetband angeordnet sind, sequentiell über eine Höhe, das entspricht der Breite eines Magnetbandes, abzutasten.

Fig. 4 zeigt zwei atromdurchflossene Leiter 12 und 13, die ein elektrisches Feld mit den Feldlinien 24 aufbauen. Die beiden elektrischen Leiter 12 und 13 sind an einer Kopfradbahn 21 angeordnet. Mach einer mathematischen Quadratur oder Betragsbildung, das entspricht einer elektrischen Gleichrichtung, ist am Ort X0 dieses elektrische Feld minimal. Siehe dazu auch (Gleichung (4) auf Seite 280 in) G. Joos, Lehrbuch der theoretischen Physik, achte Auflage, Leipzig 1954, Akademiscbe Verlagsgesellschaft Geest & Portig K.-G.

Fig. 5 zeigt eine induzierte Spannung U nach einer Gleichrichtung, die in einem Magnetkopf auf der Kopfradbahn 21 an der Stelle X0 in einem Magnetkopf induziert ist. Eine betrachtung mit zeitlicher Abszisse und einem Zeitpunkt to ist auch möglich. Durch den Spannungsunterschied zwischen U1 und U0 in der Umgebung der Stelle X0 ist eine genaue bestimmung der Phasenbzw. der Winkellage der Köpfe 2,3 oder der Kopfposition auf einer Kopfradbahn 21 möglich. Das elektrische Feld weist in der Umgebung von X0 einen starken Gradienten auf. Die induzierte Spannung wechselt an der Stelle X0 ihr Vorzeichen. Für eine gute Übertragung ist die Frequenz des Polaritätswechsels der Ströme I1 - I4 mit etwa Resonanzfrequenz eines Kopf/Übertragungssystems zu wählen. Das heiBt eine Frequenz so zu wählen, bei der das System aus Kopf, Entzerrer und Verstärker am empfindlichsten reagiert.

Fig. 6 zeigt das Kopfrad 1 mit den beiden Magnetköpfen 2 und 3, das in Richtung der Rotationsachse 25 in beide Richtungen 26 und 27 bewegbar gelagert ist. Um die jeweilige Stellung des Kopfrades 1 zu einer Umgebung 26 zu kennzeichnen, sind die beiden Leiterschleifen 22 und 23 fest in die Kopfradumgebung 26 eingebaut.

Fig. 7 zeigt die Kopfradumgebung 26 mit den beiden Leiterschleifen 22 und 23. Jede Leiterschleife 22 bzw. 23 weist Leiter 12 und 13 auf. Die Leiterschleife 22 wird vom Strom I1, die Leiterschleife 23 vom Strom I2 durchflossen.

Fig. 8 zeigt eine V-förmige Anordnung mit einer Leiterschleife 22. Jeder Leiter 12 und 13 bildet eine V-förmige Anordnung. Für diese V-förmige Anordnung ist eine Leiterschleife 22 nötig, die von einem Strom I1 durchflossen ist.

Fig. 9 zeigt mehrere Leiter 12 und 13 in einer spulenförmigen Anordnung.

Fig. 10 zeigt die Leiter 12 und 13. Der Abstand s zwischen den beiden Leitern liegt in der Größenordnung des Abstandes d zwischen jedem der Leiter 12 und 13 und den Köpfen 2,3. Die Abstände s und d sind klein gegenüber der Länge des Umfanges der Kopfradbahn. Der Abstand s zwischen den beiden Leitern beträgt im Idealfall Null.

## Patentansprüche

1. Gerät, insbesondere Videorecorder, zur Aufzeichnung und/oder Wiedergabe von Nutzsignalen auf oder von einem bandförmigen Aufzeichnungsträger, insbesondere für ein Digitalsignal auf einem Magnetband (4), mit einem oder mehreren Magnetköpfen (2,3), die auf einer rotierenden Kopfradscheibe (1) angeordnet sind, sowie mit einem Fühler (2,3) und einem diesem zugeordneten Geber (22,23) für ein Signal zur Erkennung der Winkellage der Kopfradscheibe (1), **dadurch gekennzeichnet**, daß der Geber (22,23) zwei nebeneinanderliegende elektrische Leiter (12,13) aufweist, die ortsfest positioniert sind, und daß als Fühler (2,3) der oder die Magnetköpfe (2,3) dienen, welchen neben dem Nutzsignal im Verlauf einer Umdrehung das Signal des Gebers (22,23) zugeführt ist.

2. Gerät nach Anspruch 1, <u>dadurch gekennzeichnet</u>, daß die Leiter (12,13) von einem oder mehreren Strömen (I1 - I4) in entgegengesetzter Richtung durchflossen sind.

3. Gerät nach Anspruch 1 und/oder 2, <u>dadurch gekennzeichnet</u>, daß die Leiter (12,13) länglich ausgebildet sind.

4. Gerät nach Anspruch 1,2 und oder 3, <u>dadurch gekennzeichnet</u>, daß die Leiter (12,13) parallel zueinander angeordnet sind.

5. Gerät nach einem oder mehreren der vorhergehenden Ansprüche, <u>dadurch gekennzeichnet</u>, daß die Leiter (12,13) parallel zur Rotationsachse (25) der Kopfradscheibe angeordnet sind.

6. Gerät nach einem oder mehreren der vorhergehenden Ansprüche, <u>dadurch gekennzeichnet</u>, daß der Geber zwei Leiterschleifen (22,23) aufweist.

7. Gerät nach Anspruch 6, <u>dadurch gekennzeichnet</u>, daß die beiden Leiterschleifen (22,23) eine V-förmige Anordnung zueinander bilden (Fig. 7).

8. Gerät nach einem oder mehreren der vorhergehenden Ansprüche 1 - 5, <u>dadurch gekennzeichnet,</u> daß der Geber eine Leiterschleife (22) mit V-förmiger Anordnung bildet (Fig. 8).

## Claims

1. A device, more particularly a video recorder, for recording and/or playing back useful signals onto or from a tape-like recording medium, more particularly for a digital signal on a magnetic tape (4), having one or more magnetic heads (2,3) which are arranged on a rotating head wheel disc (1), and having a sensor (2,3) and a pickup (22,23) associated therewith for a signal for recognising the angular position of the head wheel disc (1), **characterised in that** the pickup (22,23) has two adjacent electrical conductors (12,13) which are fixed in position and that the magnetic head or heads (2,3) serve as the sensor (2,3), to which the signal from the pickup (22,23) is supplied in addition to the useful signal during the course of a rotation.

2. A device according to claim 1, **characterised in that** the conductors (12,13) are flowed through in opposite directions by one or more currents (I1 - I4).

3. A device according to claim 1 and/or 2, **characterised in that** the conductors (12,13) are made elongate.

4. A device according to claim 1,2 and/or 3, **characterised in that** the conductors (12,13) are arranged parallel to each other.

5. A device according to one or more of the preceding claims, **characterised in that** the conductors (12,13) are arranged parallel to the axis of rotation (25) of the head wheel disc.

6. A device according to one or more of the preceding claims, **characterised in that** the pickup has two conductor loops (23,23).

7. A device according to claim 6, **characterised in that** the two conductor loops (22,23) together form a V-shaped arrangement (Fig.

8. A device according to one or more of the preceding claims 1 to 5, **characterised in that** the pickup forms a conductor loop (22) with a V-shaped arrangement (Fig. 8).

## Revendications

1. Appareil, en particulier magnétoscope, pour l'enregistrement et/ou la lecture de signaux utiles sur ou d'un support d'enregistrement en forme de bande, en particulier pour un signal numérique sur une bande magnétique (4), avec une ou plusieurs têtes magnétiques (2, 3), qui sont placées sur un disque rotatif pour roue de têtes (1), ainsi qu'avec un capteur (2, 3) et un générateur (22, 23) affecté à celui-ci pour un signal pour la détermination de la position angulaire du disque pour roue de têtes (1), **caractérisé en ce** que le générateur (22, 23) présente deux conducteurs (12, 13) électriques situés l'un à côté de l'autre qui sont positionnés en étant fixes et que la ou les têtes magnétiques (2, 3) servent de capteur (2, 3) auquel le signal du générateur (22, 23) est amené, au cours d'une rotation, en plus du signal utile.

2. Appareil salon la revendication 1, **caractérisé en ce** que les conducteurs (12, 13) sont traversés par un ou plusieurs courants (I1 - I4) en sens contraire.

3. Appareil selon la revendication 1 et/ou 2, **caractérisé en ce** que les conducteurs (12, 13) sont de forme allongée.

4. Appareil salon la revendication 1, 2 et/ou 3, **caractérisé en ce** que les conducteurs (12, 13) sont placés an étant parallèles l'un à l'autre.

5. Appareil selon l'une ou plusieurs des revendications précédentes, **caractérisé en ce** que les conducteurs (12, 13) sont placés parallèlement à l'axe de rotation (25) du disque pour roue de têtes.

6. Appareil selon l'une ou plusieurs des revendications précédentes, **caractérisé en ce** que le générateur présente deux boucles de conducteurs (22, 23).

7. Appareil selon la revendication 6, **caractérisé en ce** que les deux boucles de conducteurs (22, 23) forment un arrangement en forme de V l'une avec l'autre (fig, 7).

8. Appareil selon l'une ou plusieurs des revendications précédentes 1 à 5, **caractérisé en ce** que le générateur forme une boucle de conducteurs (22) avec un arrangement en forme de V (fig. 8).

EP 0 234 482 B1

Fig.10

Fig.1

Fig.9

Videosignal

Sync.-
Tr.

Dem.

ST

Fig.2

0°                    180°

Fig.3

Fig.4

Fig.5

Fig.6

Fig.7

Fig.8